# EUROPÄISCHE PATENTANMELDUNG

(11) **EP 0 732 788 A1**
(43) Veröffentlichungstag der Anmeldung: **18.09.1996**
(21) Anmeldenummer: 96810149.3
(22) Anmeldetag: 12.03.1996
(51) Int. Cl.: H02G 3/26

(54) **Anordnung mit einer Deckenstütze und einer Konsole**

(30) Priorität: 17.03.1995 CH 759/95
(71) Anmelder: ZURECON AG, CH-8003 Zürich (CH)
(72) Erfinder: Gerster, Max, Dr.oec., 8185 Winkel (CH)
(74) Vertreter: Kägi, Otto Patentanwalt

(57) **Zusammenfassung**

Deckenstützen und auch Konsolen bestehen in herkömmlicher Bauart aus mehreren Teilen, die miteinander verschweisst sind. Solche Konstruktionen sind immer relativ schwergewichtig, denn durch das Schweissen bedingt müssen ziemlich dicke Bleche verwendet werden. Das Schweissen verlangt noch zusätzliche Nacharbeiten und Aufwendungen, wie Putzen und Oberflächenschutz. Die Deckenstütze (1) ist neu aus wenigstens zwei Teilen (2, 3) gebildet. Ein Teil (2) ist zur Bildung von wenigstens drei Wänden eines Prismas ausgebildet und mit Ösen (18) versehen, und das andere Teil (3) ist mit durch die Ösen (18) durchsteckbaren Laschen (19) zur Bildung einer starren Verbindung zwischen den beiden Teilen versehen. Jede Wand jedes Teils ist an ihrem einen Ende mit abgewinkelten Laschen (9, 10) mit Löchern (20) zum Durchstecken von (Dübel-)schrauben für die Montage an der Decke oder an einem Deckenträger versehen. Die Konsole (13) ist als Stanzund Biegeteil mit einem Befestigungsteil (21) und einem Tragteil (22) ausgebildet, wobei das Befestigungsteil (21) mit nach hinten und nach unten abstehenden Haken (23) zum Einhängen in Löcher (16, 17) einer Wand der Deckenstütze (1) versehen und das Tragteil (22) mit mindestens zwei Seiten, die wenigstens angenähert senkrecht aufeinanderstehen, ausgebildet ist. Es können bis zu vier Konsolen auf gleicher Höhe an einer Deckenstütze montiert werden.

## Beschreibung

Die vorliegende Erfindung betrifft eine Anordnung mit einer Deckenstütze und wenigstens einer Konsole zur Halterung von Kabelbahnen und Leitungen, welche Deckenstütze als mehrseitiges Prisma mit vorbereiteten Löchern in den Seitenwänden für die Montage wenigstens einer Konsole und mit Mitteln zur Montage an einem Deckenträger oder an der Decke versehen ist.

In der elektrischen Installationstechnik werden, wie allgemein bekannt, zur Befestigung von Kabeltrassen, Rohren und Kabeln oder einzelnen Leitungen, wie Lichtwellenleiter o. dgl., Profilschienen mit rechtwinklig angeschweissten Flanschplatten als sogenannte Deckenstützen verwendet. An solchen Deckenstützen werden Konsolen oder Ausleger mittels Schrauben und Muttern befestigt. Auch bei diesen Konsolen handelt es sich meist um eine Art Profilträger mit angeschweisster Flanschplatte. Die Deckenstützen und die Konsolen bilden zusammen eine Funktionseinheit.

Sowohl die Deckenstützen als auch die Konsolen bestehen also herkömmlicherweise aus zwei oder mehreren Teilen, die miteinander verschweisst werden. Es ist offensichtlich, dass solche Konstruktionen schwergewichtig sein müssen, denn durch das Schweissen bedingt müssen relativ dicke Bleche verwendet werden. Das Schweissen verlangt noch zusätzliche Nacharbeiten und Aufwendungen, weil die Schweissnähte geputzt werden müssen und die Gebilde schliesslich noch einen Rostschutz verlangen, was durch Verzinken und/oder Lackieren geschieht.

Die bekannten Formen.von Deckenstützen und Konsolen, wie sie im Handel erhältlich sind, haben zudem den Nachteil, dass die Deckenstützen nur an höchstens drei Seiten zur Befestigung von Konsolen benützbar sind. Auch muss der Monteur, der die Aufgabe hat, die Konsolen anzuschrauben, ausser den Schrauben, Muttern, Unterlagscheiben und allenfalls Federringen noch das entsprechende Werkzeug mit sich tragen, was die Montageleistung stark beeinträchtigt.

Es ist dementsprechend eine Aufgabe der Erfindung, diese Nachteile zu beheben und eine Deckenstütze und eine Konsole zu schaffen, bei der vorbehandelte (korrosionsgeschützte) Bleche verwendbar sind, bei denen keine Schweissarbeiten vorkommen und zur Befestigung der Konsolen keine Schrauben und dgl. benötigt werden, wobei Konsolen an allen vier Seiten der Deckenstützen befestigt bzw. eingehängt werden können.

Erfindungsgemäss wird diese Aufgabe dadurch gelöst, dass die Deckenstütze aus wenigstens zwei Teilen gebildet ist, von denen das eine Teil zur Bildung von wenigstens drei Wänden des Prismas ausgebildet und mit Ösen versehen ist, und das andere Teil als weitere Seitenwand mit durch die Ösen durchsteckbaren Laschen zur Bildung einer starren Verbindung zwischen beiden Teilen versehen ist, dass jede Wand jedes Teils an ihrem einen Ende mit einer abgewinkelten Lasche mit Schraubenlöchern für die Deckenbefestigung versehen ist, und dass ferner die Konsole als Stanz-und Biegeteil mit einem Befestigungsteil und einem Tragteil ausgebildet ist, wovon das Befestigungsteil mit nach hinten und nach unten abstehenden Haken zum Einhängen in Löcher einer Seitenwand der Deckenstütze versehen und das Tragteil mit mindestens zwei Seiten, die wenigstens angenähert senkrecht aufeinanderstehen, ausgebildet ist.

Nachstehend wird ein Ausführungsbeispiel der Erfindung anhand der Zeichnung beschrieben. Es zeigen:
- Fig. 1: die Ansicht eines ersten Zuschnittes mit drei Wänden für eine vierseitige, quadratische Deckenstütze,
- Fig. 2: den Grundriss des ersten Zuschnittes nach Fig. 1,
- Fig. 3: die Ansicht eines zweiten Zuschnittes, der als vierte Seite der Deckenstütze zusammen mit dem Zuschnitt nach Fig. 1 die vierseitige Deckenstütze bildet,
- Fig. 4: die Schnittansicht des zweiten Zuschnittes entlang der Schnittlinie IV-IV in Fig. 3,
- Fig. 5: die Stirnansicht des zu einem U gebogenen Zuschnittes nach Fig. 1 mit nach aussen gebogenen Befestigungslaschen, ergänzt mit der vierten Seite nach Fig. 3 mit ebenfalls nach aussen gebogener Befestigungslasche,
- Fig. 6: den Seitenriss einer Konsole,
- Fig. 7: die Ansicht derselben Konsole von vorn,
- Fig. 8: den Grundriss der Konsole nach Fig. 6,
- Fig. 9: eine Schnittansicht in grösserem Massstab entlang der Linie IX-IX in Fig. 7, jedoch die Konsole an einer Seitenwand der Deckenstütze nach Fig. 5 montiert und mit einer Abdeckung versehen, und
- Fig. 10: eine gedehnt perspektivisch gezeichnete, aus den Zuschnitten nach Fig. 1 und 3 gebildete Deckenstütze mit dazu im Abstand dargestellter Konsole.

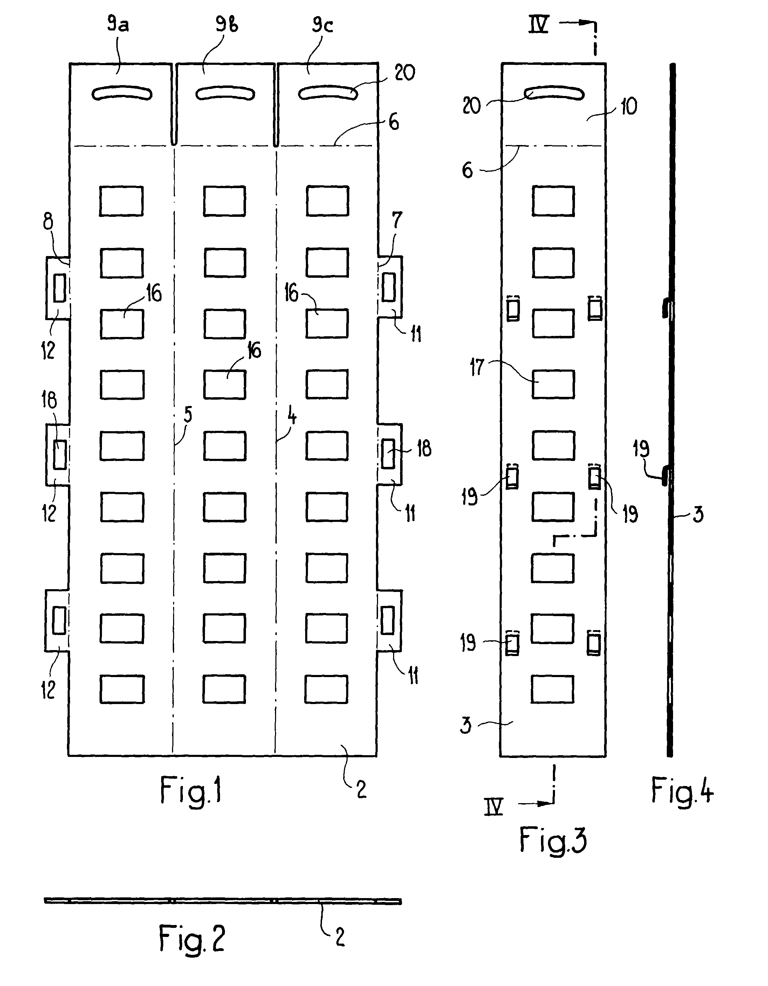

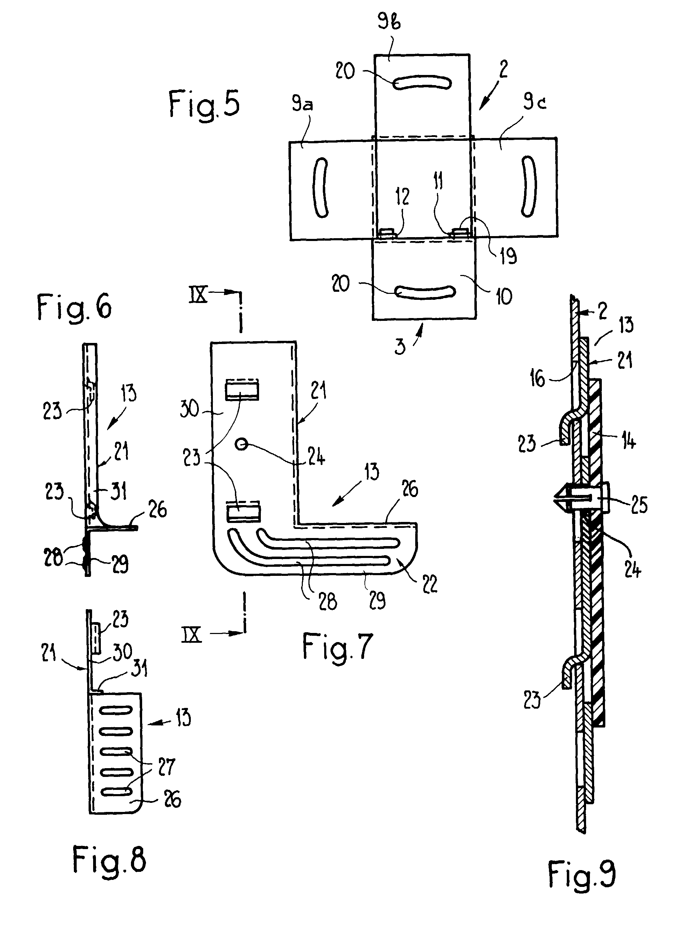

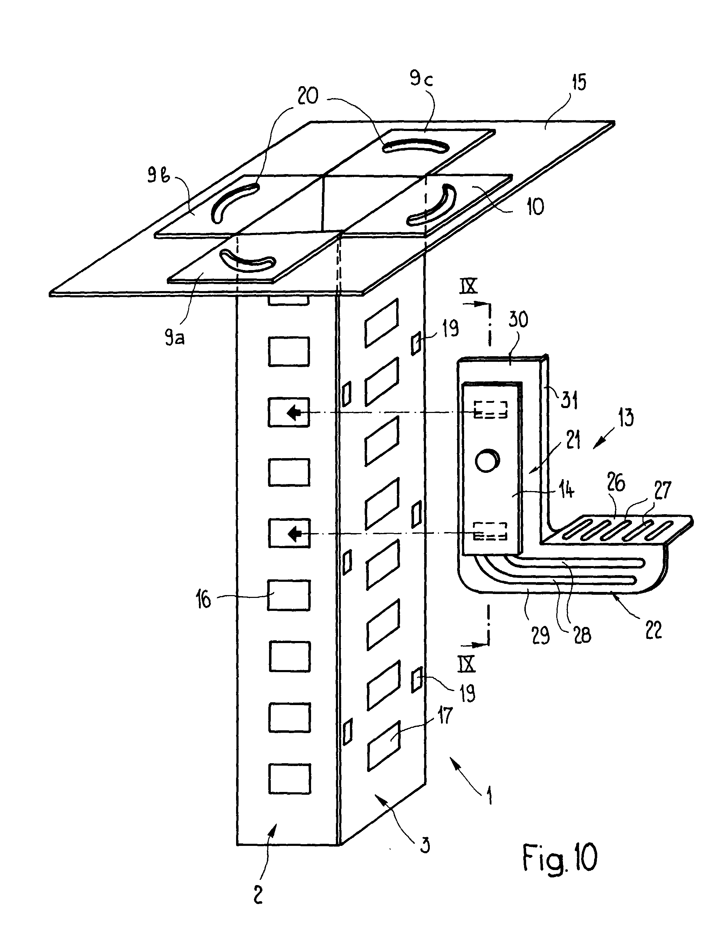

Die vierseitige, quadratisch prismatische Deckenstütze 1, wie sie in Fig. 10 perspektivisch gezeigt ist, besteht aus den Zuschnitten 2 und 3 gemäss Fig. 1 bis 4. Der Zuschnitt 2 ist für drei Seiten des Prismas bestimmt, mit den zwei Biegelinien 4 und 5, bei denen das Blech jeweils um 90° gebogen wird. Jede dieser drei Seiten hat in Reihe angeordnete, rechteckige Ausnehmungen 16. An der einen Schmalseite des Zuschnittes 2 befinden sich Laschen 9a, 9b und 9c, die an der Biegelinie 6 um 90° abgebogen werden, so dass von oben gesehen ein Prismenteil gemäss Fig. 5 entsteht. Die an beiden Längsseiten des Zuschnittes 2 vorhandenen Einhängelaschen 11, 12 mit je einer Öse 18 sind, wie ebenfalls in Fig. 5 ersichtlich, gegeneinander um die Biegelinie 7 bzw. 8 umgebogen.

Der Zuschnitt 3 in Fig. 3 besitzt eine gleiche Anzahl Ausnehmungen 17 mit identischer Form und Teilung wie die Ausnehmungen 16 im Zuschnitt 2. Dazu sind an den beiden Randpartien noch Einhängehaken 19 ausgebildet, deren Form aus Fig. 4 hervorgeht. Diese Haken 19 werden in die Ösen 18 in den Laschen 11, 12 am Zuschnitt 2 eingehängt, so dass ein starres, vierseitiges quadratisches Prisma entsteht, das ohne Schweissarbeit und nur durch Biegeoperationen herstellbar ist.

Auch der Zuschnitt 3 besitzt an seiner einen Schmalseite eine Lasche 10, die in gleicher Weise wie die Laschen 9a, 9b, 9c am Zuschnitt 2 an einer Biegelinie 6 umgebogen wird. Eine solche Deckenstütze 1 kann mittels der Ausnehmungen 20 in den Laschen 9a, 9b, 9c und 10 an einem Deckenträger oder direkt an einer Decke angeschraubt werden.

Die Konsole 13, auch Ausleger genannt, ist ebenfalls - vorzugsweise aus einem einstückigen Zuschnitt - als Stanz- und Biegeteil gestaltet und weist gemäss Fig. 6, 7, und 8 einen Befestigungsteil 21 und einen Tragteil 22 auf. Der Befestigungsteil 21 weist zwei Einhängehaken 23 auf, hier in Form von gestanzten und gebogenen Laschen, die in Ausnehmungen 16, 17 der Deckenstütze einhängbar sind. Die beiden Schenkel 30 und 31 des Befestigungsteils 21 haben zusammen eine Breite, die höchstens gleich gross ist wie die Breite einer Seitenwand der Deckenstütze 1. Damit können an zwei aneinanderstossenden Wänden des Prismas je eine Konsole montiert werden, d.h. an vier Wänden können somit auf gleicher Höhe bis zu vier Konsolen befestigt werden.

Anstelle der hier dargestellten, gestanzten und ausgebogenen Haken 23 können auch (z.B. aus Festigkeitsgründen) Haken als separate Teile eingesetzt werden, die durch Löcher im Schenkel 30 (anstelle der Haken 23) gesteckt, nach hinten und nach unten ragen und in Ausnehmungen 16, 17 der Deckenstütze eingehängt werden.

Zwischen den beiden Haken 23 (oder entsprechenden Öffnungen) im Schenkel 30 befindet sich ein Loch 24. Wie Fig. 9 zeigt, kann eine Abdeckung 14 mittels eines durch das Loch 24 gesteckten Kunststoff- oder Gummistöpsels 25 o. dgl. befestigt werden. Indem der Stöpsel 25 auch in eine Ausnehmung 16 oder 17 der Deckenstütze eingreift, wird damit die Konsole 13 gegen Herausfallen oder unbeabsichtigtes Herausheben gesichert.

Der Tragteil 22 der Konsole 13 ist als Winkelprofil geformt, mit einer Schlitze 27 aufweisenden Auflagefläche 26 zur Aufnahme von irgendwelchen Kabelträgern o. dgl., und mit einer senkrechten Seitenwand 29, welcher dem Tragteil die nötige Steifheit verleiht; mittels eingepresster Sicken 28 kann die Seitenwand 29 bzw. die Konsole zusätzlich verstärkt werden.

Um die Laschen 9a, 9b, 9c und 10 mit den die Deckenstütze befestigenden Schrauben abzudecken, kann eine Kopfplatte 15 mit quadratischem Ausschnitt vorgesehen sein, die von unten über die Deckenstütze geschoben und nahe an der Decke mittels Stiften o. dgl. an der Deckenstütze fixiert werden kann.

Es ist leicht einzusehen, dass eine solche Anordnung mit Deckenstütze und Konsole(n) aus insgesamt drei Stanz- und Biegeteilen aus relativ dünnem Blech von z.B. 0,75 mm Dicke einfach herstellbar ist. Das verwendete Blech kann lackiert oder sonstwie rostsicher vorbehandelt sein. Die Biegeoperationen beschädigen solche Oberflächenbeschichtungen nicht oder höchstens unwesentlich und deshalb ist keine Nacharbeit zwecks Korrosionsschutz erforderlich. Schweissarbeiten braucht es ebenfalls nicht, und die einzelnen Teile sind nur durch Einhängen tragfähig und starr miteinander verbunden.

## Patentansprüche

1. Anordnung mit einer Deckenstütze (1) und wenigstens einer Konsole (13) zur Halterung von Kabelbahnen und Leitungen, welche Deckenstütze als mehrseitiges Prisma mit vorbereiteten Löchern (16, 17) in den Seitenwänden für die Montage wenigstens einer Konsole, und mit Mitteln (9, 10) zur Montage an einem Deckenträger oder an der Decke versehen ist,
**dadurch gekennzeichnet**, dass die Deckenstütze (1) aus wenigstens zwei Teilen (2, 3) besteht, von denen das eine Teil (2) zur Bildung von wenigstens drei Wänden des Prismas ausgebildet und mit Ösen (18) versehen ist, und das andere Teil (3) als weitere Seitenwand mit durch die Ösen (18) durchsteckbaren Laschen (19) zur Bildung einer starren Verbindung zwischen beiden Teilen versehen ist, dass jede Wand jedes Teils (2, 3) an ihrem einen Ende mit einer abgewinkelten Lasche (9, 10) mit Schraubenlöchern (20) für die Deckenbefestigung versehen ist, und dass ferner die Konsole (13) als Stanz- und Biegeteil mit einem Befestigungsteil (21) und einem Tragteil (22) ausgebildet ist, wovon das Befestigungsteil (21) mit nach hinten und nach unten abstehenden Haken (23) zum Einhängen in Löcher (16, 17) einer Seitenwand der Deckenstütze (1) versehen und das Tragteil (26) mit mindestens zwei Seiten, die wenigstens angenähert senkrecht aufeinanderstehen, ausgebildet ist.

2. Anordnung nach Anspruch 1, dadurch gekennzeichnet, dass die Deckenstütze (1) als vierseitiges Prisma ausgebildet ist, von dem drei Wände aus einem gemeinsamen Zuschnitt (2) gebildet und zu einem U-förmigen Halbteil geformt sind, und die vierte Wand als zweiter Zuschnitt (3) über der offenen Seite des Halbteils befestigt ist.

3. Anordnung nach Anspruch 2, dadurch gekennzeichnet, dass am Halbteil mit Schlitzen (18 versehene Laschen (11, 12) und an der vierten Wand in die genannten Schlitze (18) des Halbteils einhängbare Haken (19) angeformt sind, um ein vierseitiges, geschlossenes Prisma zu bilden.

4. Anordnung nach einem der vorangehenden Ansprüche, dadurch gekennzeichnet, dass die Konsole (13) aus zwei senkrecht aufeinanderstehenden Partien (21, 22) gebildet ist, von denen eine Partie (21) als Befestigungsteil und die andere Partie (22) als Tragteil ausgebildet sind, dass beide Partien je zwei senkrecht aufeinanderstehende Seitenwände (30, 31; 26, 29) haben, wobei am Befestigungsteil eine breitere Seitenwand (30) zur Befestigung an einer Seitenwand der Deckenstütze (1) und eine schmalere Seitenwand (31) zum Anliegen an einer anschliessenden Seitenwand der Deckenstütze (1) bestimmt sind, und dass das Tragteil (22) mit einer verbreiterten Fortsetzung der genannten schmaleren Seitenwand (31) eine Auflagefläche (26) bildet und die von der Auflagefläche (26) senkrecht nach unten ragende zweite Fläche (29) als Versteifungsfläche, vorzugsweise mit geprägten Sicken (28), ausgebildet ist.

5. Anordnung nach Anspruch 4, dadurch gekennzeichnet, dass die Breitenabmessungen der Seitenwände (30, 31) des Befestigungsteils (21) zusammen höchstens gleich sind wie die Breite einer Seitenwand der Deckenstütze (1), so dass es möglich ist, bis zu vier Konsolen (13) auf gleicher Höhe nebeneinander an der Deckenstütze zu befestigen.
